# EUROPEAN PATENT APPLICATION

(11) **EP 3 078 547 A1**
(43) Date of publication of application: **12.10.2016**
(21) Application number: 15162850.0
(22) Date of filing: 08.04.2015
(51) Int. Cl.: B60R 1/12, B25J 15/00, B29C 45/00

(54) **ELECTRICAL MODULES, AUTOMOTIVE MIRRORS WITH SUCH ELECTRICAL MODULES AND METHOD FOR PRODUCING SUCH AUTOMOTIVE MIRRORS**

(71) Applicant: SMR Patents S.à.r.l., 1653 Luxembourg (LU)
(72) Inventor:
(74) Representative: Weber-Bruls, Dorothée

(57) **Abstract**

The invention refers to a module (50, 500) for automating the assembly thereof to at least one further part (20, 50), in particular during the assembly of an automotive mirror, with the module (50, 500) comprising
at least on electronic element housed within a plastic casting and connected to conducting paths (530) on at least one of the surfaces of the plastic casting, and
at least one standard gripping point (520), guiding structure (510, 511), snap connection element (513) and/or sealing member (540) provided by the plastic casting. It also refers to automotive mirrors with such electrical modules for manufacturing such automotive mirrors.

## Description

The present invention refers to electrical modules for automating the assembly of in particular automotive mirrors, automotive mirrors with such electrical modules and a method for producing such automotive mirrors.

In present days, the assembling of automotive mirrors, like side mirrors, is mostly done manually by human beings within a manufacturing unit. This leads to high costs and is time consuming. Therefore there is the need for providing automotive mirror parts suited for an automated robotic assembly line.

EP 14196582 teaches automotive mirror parts suited for an automated assembling within a manufacturing unit, by allowing a handling with a common basic gripper for all parts instead of several different grippers for handling different mirror parts with different designs and thus different geometries and/or topologies. The parts are provide with standard gripping points which can be in form of slots, cut outs, recesses, clips, straps and/or projections and can be introduced at any available area within the individual parts with a shape (like square, rectangular, triangular, circular, hexagonal, octagonal or pentagonal) and dimension adapted to the gripper design or vice versa.

Flexible printed circuit boards (FPC) as such are well known in the art. A robotic gripping device which is in particular suited for handling such FPCs during the assembly of automotive mirrors is also described in EP 14196582. Such a gripping device is provided with n gripping units each having one arm arranged around a central spine, each arm having a pair of 2 fingers, with the spine, the arms as well as the fingers being operated pneumatically, hydraulically and/or electrically for handling FPCs with n branches connected to electrical modules. The gripping device is designed based on the idea to benefit from a combination of the advantages of spider legs and a human palm with fingers and, therefore, is called spider gripper in the following.

Molded Interconnect Devices (MID), which are plastic components containing electric printed circuit boards and function as 3 dimensional printed circuit boards, are in particular used in the automotive industry. Via Laser Direct Structuring (LDS) said electric printed circuit boards can for example be applied to plastic castings.

It is the object of the present invention to provide electrical modules for automating the assembly of in particular automotive mirrors.

This object is solved by a module for automating the assembly thereof to at least one further part, in particular during the assembly of an automotive mirror, with the module comprising at least on electronic element housed within a plastic casting and connected to conducting paths of at least one of the surfaces of the plastic casting, and at least one standard gripping point, guiding structure, snap connection element and/or sealing member provided by the plastic casting.

According to the invention it is preferred that the module is a molded interconnect device (MID) providing the plastic casting with the conducting paths, with the MID preferably being a metalized two component injection molding, an injection molding with an impressed metal foil or a laser structured injection molding.

It is also proposed with the invention that the plastic casting is molded with the standard gripping point, in particular provided in an edge region, the guiding structure, in particular provided by a tapering, the snap connection element, in particular provided by a hook or recess, and/or the sealing member, in particular provided by a deformable projection.

Further, the invention provides an automotive mirror housing a printed circuit board to be connected to a power supply and a control unit outside the mirror via at least one cable and being connected to at least one electrical module of the invention, which is assembled inside the mirror, wherein the printed circuit board and the module connected thereto form a pre-assembled unit.

Preferred according to the invention is that the module is connected to a mirror part free of electronic elements.

With the invention it is also proposed that the module is connected to a mirror part provided with a structure mating the guiding structure, the snap connection element and/or the sealing member of the module, respectively.

Embodiments of the invention can be characterized in that the module comprises a lightning unit, preferably to function as a turn signal module, a blind spot warning module, a logo lamp unit, an environment illuminating unit or the like, or a motor, in particular for a mirror glass adjustment, or a sensor, in particular in form of a camera or radar sensor.

Further embodiments of the invention are characterized in that the printed circuit board is in form of a flexible printed circuit board (FPC) to which a plurality of modules is connected.

The automotive mirror of the invention can be a side mirror.

Finally, the invention also provides a method for manufacturing an automotive mirror of the invention, comprising the following steps:
- forming the printed circuit board as flexible printed circuit board (40, 400) with n+1 branches, n ∈ N,
- connecting up to n of said branches to one module (50, 500) each and connecting one branch to cables (47) or a cable harness (470),
- providing mirror parts free of electronic elements, and
- assembling the mirror parts and the modules, preferably by snap connections.

The invention, together with further objects and advantages, may be best understood, by example, with reference to the following description of embodiments taken together with the accompanying schematic drawings:
- Fig. 1a: shows a perspective view of a flexible circuit board without an electrical module of the invention being connected.
- Fig. 1b: shows an enlargement of one of the branches of the flexible circuit board of Fig. 1a with a connected electrical module.
- Fig. 2a: shows a perspective view of a housing part and a light guide unit prior to assembly.
- Fig. 2b: shows an enlargement of the housing part and the light guide unit of Fig. 2a after assembly and a turn signal module during assembly.

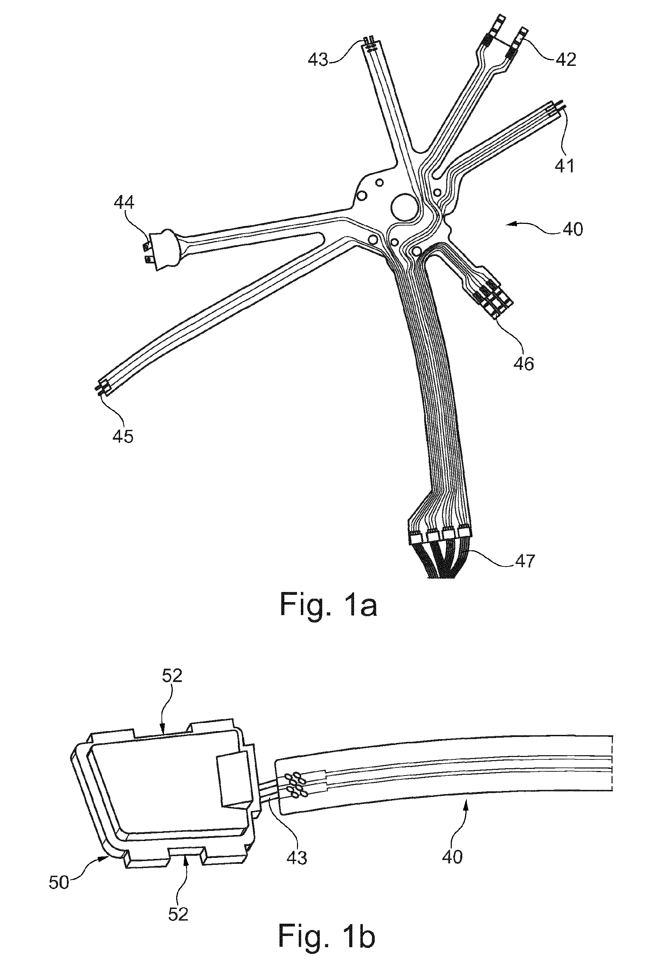

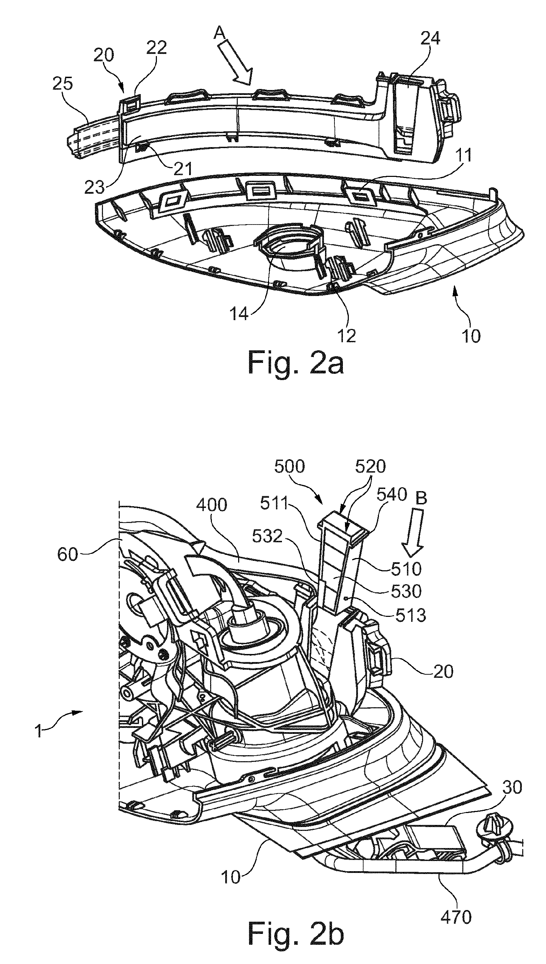

An automotive side mirror comprises a plurality of parts, like a flexible printed circuit board (FPC) shown in figures 1a and 1b and to be installed within a housing to connect electrical modules, e.g. a turn signal module, with a power supply and a control unit outside the automotive side mirror during assembly thereof, with said assembly being described with respect to figures 2a and 2b below.

FPC 40 of figure 1a has 7 arms or branches, 6 of said branches being provided with terminals 41 to 46 to be connected to electrical modules, with figure 1b showing one of said 6 branches connected to a module 50, whereas the 7th branch is connected to cables 47 for connecting the electrical module 50 to a not shown power supply and a not shown control unit.

In a pre-assembly step the FPC 40 is connected with 6 modules 50 and the cables 47 by soldering, gripping or the like, to provide one unit.

Said unit of the FPC 40, the 6 electrical modules 50 and the cables 47 looks like a spider and, therefore, is called spider in the following.

In order to connect said pre-assembled spider to the remaining parts of the automotive side mirror in an automated production line with a spider gripper described in EP 14196582, each of said modules 50 is provided with standard gripping points. The electrical module 50 of figure 1b is formed with opposing recesses 52 providing said gripping points.

The gripping points providing recesses 52 of each of the 6 modules 50 allow for a not shown spider gripper having 6 arms and, thus, 6 pairs of fingers to grip each of the modules 50 between 2 fingers of one arm for assembly. Each free end of an arm of the spider gripper has a small pneumatic or hydraulic cylinder or electrically operated motor based system for gripping one electric module 50 between 2 fingers engaging the module 50 within its recess 52 at two opposite sides, introducing the module 50 into a corresponding mirror part and ejecting the module 50 between said 2 fingers at the end of the assembly.

The modules 50 can be provided as MIDs with a plastic molding housing electrical components comprising e.g. a lightning unit to form in particular a turn signal module and providing conducting paths obtained by Laser Direct Structuring (LDS). The plastic molding can be provided with further structural features facilitating the assembly of the modules 50 of the spider to the remaining automotive mirror parts.

In case the module is to function as a turn signal module 500 connected to a flexible printed circuit board 400, it is to be assembled with a light guide unit 20 during the assembly thereof to a housing part 10 as will be explained with respect to figures 2a and 2b in the following:
The light guide unit 20 is provided with a plurality of clip connection elements 21, 22 formed together with a housing 23 which is also provided with an opening 24 for inserting the turn signal module 500 between the housing 23 and a light guide 25.
The clip connection elements 21 are suited for engaging mating clip connection elements 11 provided by the housing part 10. The housing part 10 is formed in addition with further clip connection elements 12 for the connection of a mirror foot 30 extending through an opening 14 provided within the housing 10. The direction of assembly of the mirror parts 10, 20 and 30 is indicated by the arrow A in figure 2a.
The light guide unit 20 does not comprise any electronic element, in particular no lighting unit. All electronic elements required for providing a turn signal are arranged within the turn signal module 500 to be introduced into the opening 24 during assembly.

According to the invention, the two pre-assembled parts, namely a spider comprising the flexible printed circuit board 400, the turn signal module 500 and a cable harness 470, and a unit with the light guide 20, the housing part 10 and the mirror foot 30, are connected to each other via snap connections, with the assembly direction being indicated by the arrows B in figure 2b.

The turn signal module 500 is provided with opposing gripping edges 520 at its upper end facing away from the light guide unit 20 in figure 2b. Said gripping edges 520 can be gripped by a spider gripper (not shown) in line with the teaching of EP 14196582. The spider gripper can move the module 500 in assembly direction B to enter the opening 24.

The turn signal module 500 is provided with a opposing guiding faces 510, 511 providing a tapering facilitating the insertion of the turn signal module 500 into the opening 24. The turn signal module 500 is slided into the opening 24 by the spider gripper until an abutment of the guiding faces 510, 511 against corresponding surfaces of the housing 23, with a final locking by a snap connection. For that purpose the module 500 is provided with a snap connection element 523 in form of a hole into which a hook (not shown) provided within the light guide units 20 can enter.

In the assembled position of the turn signal module 500 within the light guide unit 20 a connection 532 of the conducting paths 530 of the module 500 to the flexible printed circuit board 400 is arranged within the region of the opening 24. Still further, a sealing member 540 provided in form of a projection of the module 500 seals the connection between the light guide unit 20 and the exterior of the automotive mirror 1 to be assembled.

The spider gripper is detached from the module 500 as soon as the same has been placed into its final position within the opening 24.

Although modifications and changes may be suggested by those skilled in the art, it is the intention of the application to embody within the patent warranted hereon all changes and modifications as reasonably and probably come within the scope of this contribution to the art. The features of the present invention which are believed to be novel are set forth in detail in the appended claims. The features disclosed in the description, the figures as well as the claims could be essential alone or in every combination for the realization of the invention in its different embodiments.

### Reference sign list

- 1: automotive mirror
- 10: housing part
- 11, 12: clip connection element
- 14: opening
- 20: light guide unit
- 21, 22: clip connection element
- 23: housing
- 24: opening
- 25: light guide
- 30: mirror foot
- 40: flexible printed circuit board
- 41 - 46: terminals
- 47: cables
- 50: electrical module
- 52: recess
- 60: mirror plate adjustment unit
- 400: flexible printed circuit board
- 470: cable harness
- 500: turn signal module
- 510, 511: guiding face
- 513: snap connection element
- 520: gripping edge
- 530: conducting paths
- 532: connection to flexible printed circuit board
- 540: sealing member

- A, B: assembly direction

## Claims

1. Module (50, 500) for automating the assembly thereof to at least one further part (20, 50), in particular during the assembly of an automotive mirror (1), with the module (50, 500) comprising
at least on electronic element housed within a plastic casting and connected to conducting paths (530) on at least one of the surfaces of the plastic casting, and
at least one standard gripping point (520), guiding structure (510, 511), snap connection element (513) and/or sealing member (540) provided by the plastic casting.

2. Module according to claim 1, wherein
the module (50, 500) is a molded interconnect device (MID) providing the plastic casting with the conducting paths (530), with
the MID preferably being a metalized two component injection molding, an injection molding with an impressed metal foil or a laser structured injection molding.

3. Module according to claim 1 or 2, wherein
the plastic casting is molded with
the standard gripping point (520), in particular provided in an edge region,
the guiding structure (510, 511), in particular provided by a tapering,
the snap connection element (513), in particular provided by a hook or recess, and/or
the sealing member (540), in particular provided by a deformable projection.

4. Automotive mirror (1) housing a printed circuit board (40, 400) to be connected to a power supply and a control unit outside the mirror via at least one cable (47, 470) and being connected to at least one electrical module (50, 500) which is assembled inside the mirror and provided according to one of the preceding claims, wherein
the printed circuit board (40, 400) and the module (50, 500) connected thereto form a pre-assembled unit.

5. Automotive mirror according to claim 4, wherein
the module (50, 500) is connected to a mirror part (20) free of electronic elements.

6. Automotive mirror according to claim 4 or 5, wherein
the module (50, 500) is connected to a mirror part (20) provided with a structure mating the guiding structure (510, 511), the snap connection element (513) and/or the sealing member (540) of the module (50, 500), respectively

7. Automotive mirror according to any one of the claims 4 to 6, wherein
the module (50, 500) comprises
a lightning unit, preferably to function as a turn signal module, a blind spot warning module, a logo lamp unit, an environment illuminating unit or the like, or
a motor, in particular for a mirror glass adjustment, or
a sensor, in particular in form of a camera or radar sensor.

8. Automotive mirror according to any one of the claims 4 to 7, wherein
the printed circuit board is in form of a flexible printed circuit board (40, 400) to which a plurality of modules (50, 500) is connected.

9. Automotive mirror according to any one of the claims 4 to 8, wherein
the automotive mirror is an side mirror.

10. Method for manufacturing an automotive mirror (1) according to anyone of the claims 4 to 9, comprising the following steps:
• forming the printed circuit board as flexible printed circuit board (40, 400) with n+1 branches, n ∈ N,
• connecting up to n of said branches to one module (50, 500) each and connecting one branch to cables (47) or a cable harness (470),
• providing mirror parts free of electronic elements, and
• assembling the mirror parts and the modules, preferably by snap connections.
